# EUROPÄISCHE PATENTANMELDUNG

(11) **EP 3 599 007 A1**
(43) Veröffentlichungstag der Anmeldung: **29.01.2020**
(21) Anmeldenummer: 18185206.2
(22) Anmeldetag: 24.07.2018
(51) Int. Cl.: B01D 46/00, B01D 46/10, B01D 46/52

(54) **FILTERANORDNUNG MIT GELDICHTUNG UND VERWENDUNG EINER SOLCHEN FILTERANORDNUNG ALS INNENRAUMLUFTFILTER**

(71) Anmelder: Carl Freudenberg KG, 69469 Weinheim (DE)
(72) Erfinder: Sieh, Maik, 69207 Sandhausen (DE); Chirnside, Morfula, 69124 Heidelberg (DE)

(57) **Zusammenfassung**

Die Erfindung betrifft eine Filteranordnung (10) und die Verwendung einer solchen Filteranordnung und dient der Filtration eines Luftstromes. Die erfindungsgemäße Filteranordnung (10) besitzt ein Filterelement (1) in einer ersten Filterstufe und ein Gehäuse (20) zur Aufnahme des Filterelements (1), wobei das Filterelement (10) ein Filtermaterial (2) aufweist. In vorteilhafter Weise ist zwischen dem Filterelement (1) und dem Gehäuse (20) eine umlaufende Geldichtung (4) angeordnet zur Abdichtung des Filterelements (1) gegenüber dem Gehäuse (20). Diese ist insbesondere als Gelkanal (4.1) ausgeführt. Durch diese Filteranordnung (10) wird eine einfach zu handhabenden Montage eines Filterelements (1) und eine leckfreie Abdichtung im montierten Zustand sichergestellt.

## Beschreibung

### Technisches Gebiet

Die Erfindung betrifft eine Filteranordnung gemäß dem Oberbegriff von Anspruch 1 und die Verwendung einer solchen Filteranordnung gemäß Anspruch 8 und dient der Filtration eines Luftstromes.

### Stand der Technik

Beim Einsatz von Filteranordnungen in der Luftfiltration ist es wichtig, dass der Filter gegenüber dem luftführenden Gehäuse gut abgedichtet und so sichergestellt ist, dass die Luft nicht zwischen Gehäuse und Filter passieren kann. Es soll kein Bypass vorhanden sein und eine leckfreie Abdichtung vorliegen.

In der US 2009/0056293 A1 wird dieser Anforderung begegnet, indem ein Luftfiltrationssystem vorgeschlagen wird, welches ineinandergreifende Rahmenelemente und als Dichtelement zusätzliche überstehende Laschen des Filtermaterials besitzt. Ein solches Luftfiltrationssystem hat zum einen einen komplizierten Aufbau. Zum anderen ist bei der Montage des Filters genauestens darauf zu achten, dass die zuätzlichen Laschen nicht beschädigt werden. Anderenfalls wird ein Bypass geschaffen und die Effizienz des Filtersystems wird beeinträchtigt.

Auch sind aus dem Stand der Technik andere Methoden zur Abdichtung von Filtern bekannt. In Hauben für Luftkoditionierungseinrichtungen für Reinräume kommen Gelkanäle mit darin eingreifenden Schwertern zum Einsatz. Ein solcher Filter ist z.B. in der EP 2 149 405 B1 beschrieben. Derartige Dichtlösungen können jedoch nicht in der ersten Filterstufe zum Einsatz kommen, da durch das Rohgas ein Eintrag von Partikeln in das Gel erfolgen würde und sich eine schnelle Alterung des Gels ergäbe. Eine solche Dichtlösung würde keine leckfreie Abdichtung ermöglichen.

### Aufgabenstellung

Aufgabe der vorliegenden Erfindung ist es eine Filteranordnung zu schaffen, die bei einer einfach zu handhabenden Montage eines Filterelements eine leckfreie Abdichtung sicherstellt.

### Technische Lösung

Gelöst wird diese Aufgabe durch eine Filteranordnung mit den Merkmalen von Anspruch 1.

Die erfindungsgemäße Filteranordnung besitzt ein Filterelement und wird in einer ersten Filterstufe eingesetzt. Erste Filterstufe mein hier, dass das zu filternde Rohgas direkt - ohne Vorfilter - an dem Filterelement anliegt und hier zum ersten Mal gefiltert wird. Weiter besitzt die Filteranordnung ein Gehäuse zur Aufnahme des Filterelements. Das Filterelement weist dabei ein Filtermaterial auf zur Filtration eines Luftstroms. In vorteilhafter Weise ist zwischen dem Filterelement und dem Gehäuse eine um das Filterelement umlaufende Geldichtung angeordnet zur Abdichtung des Filterelements gegenüber dem Gehäuse. Die Geldichtung kann dabei insbesondere als Gelkanal ausgeführt sein, nämlich als nutförmiger Kanal mit einer Gelfüllung, wobei als Gel zum Beispiel PU oder Silikon verwendet werden können. Vorteilhaft besitzt die Filteranordnung ein um das Filterelement umlaufendes Schwert, welches in montiertem Zustand des Filters im Gehäuse in die Geldichtung, nämlich in die Gelfüllung des Gelkanals, eintaucht und besitzt weiter ein um das Filterelement umlaufendes Abdeckelement zum Abdecken des Gelkanals auf der Rohgasseite der Filteranordnung. Das Abdeckelement trägt dazu bei, einen Schmutzeintrag, zum Beispiel von Staub, durch den Luftstrom zu verhindern oder zumindest zu vermindern. In einer solchen Filteranordnung wird eine einfache Montage des Filterelements ermöglicht, und gleichzeitig eine leckfreie Abdichtung sichergestellt.

Für eine effektive Abdichtung und einen verminderten Schmutzeintrag in das Gel des Gelkanals ergibt sich, dass der Gelkanal, das Schwert und das Abdeckelement in einer Draufsicht die gleiche Form besitzen, derart, dass das Schwert in etwa mittig in den Gelkanal eintauchen kann und dass der zur Rohgasseite hin offene Teil des Gelkanals zwischen dem Schwert und der Begrenzung des Gelkanals von dem Abdeckelement abgedeckt wird.

In vorteilhafter Weiterbildung der erfindungsgemäßen Filteranordnung sind unterschiedliche Ausgestaltungen des Schwerts möglich.
- In einer ersten Variante wird das Schwert durch eine im Vergleich zu den übrigen Faltabschnitten längere Endfalte des Filtermaterials gebildet.
- In einer zweiten Variante wird das Schwert durch einen an das Faltenpaket angeklebten Kantenstreifen gebildet.
- In einer dritten Variante wird das Schwert durch einen aus einem Filterrahmen zur Halterung des Filterelements hervorstehenden Steg gebildet, ähnlich einem Flansch und ist ausformt als gegenüber der Oberfläche des Filterrahmens erhabene Leiste.
- In einer vierten Variante wird das Schwert durch einen aus dem Gehäuse hervorstehenden Steg gebildet, ausgeführt als gegenüber der Oberfläche des Gehäuses erhabene Leiste.

Hat das Filterelement eine hexaederförmige Grundgestalt, so kann das Schwert in einer bevorzugten Ausführungsform an zwei gegenüberliegenden Seiten durch je eine Endfalte des Filtermaterials und an den beiden anderen Seiten durch einen Kantenstreifen gebildet werden. Vorteil dieser Ausführungsform ist ein besonders geringer Materialeinsatz.

In einer alternativen, ebenfalls besonders vorteilhaften Ausführungsform, ist das Schwert nur durch Kantenstreifen gebildet. Vorteil dieser Ausführungsform ist eine besonders einfache Fertigung der Filteranordnung. Weitere Kombinationen zur Bildung des Schwertes aus den vorgenannten Varianten sind denkbar.

In vorteilhafter Weiterbildung der erfindungsgemäßen Filteranordnung kann das Abdeckelement unterschiedliche Ausformungen besitzen.
- In einer ersten Variante wird das Abdeckelement durch eine streifenförmige Lasche an der Endfalte des Filtermaterials gebildet, zum Beispiels durch eine V-Lasche. Unter einer V-Lasche wird dabei ein unter einem Winkel von der Endfalte abstehender Faltenabschnitt verstanden, wobei die Lasche materialeinheitlich und einteilig mit dem Filtermaterial ist.
- In einer zweiten Variante wird das Abdeckelement durch eine streifenförmige Lasche an einem, an das Faltenpaket angeklebten Kantenstreifen gebildet, zum Beispiel durch eine V-Lasche. Unter einer V-Lasche wird dabei ein unter einem Winkel von dem Kantenstreifen abstehender Faltenabschnitt verstanden, wobei die Lasche materialeinheitlich und einteilig mit dem Kantenstreifen ist.
- In einer dritten Variante wird das Abdeckelement durch einen Filterrahmen zur Halterung des Filterelements gebildet.
- In einer vierten Variante wird das Abdeckelement durch ein am Filterelement angebrachtes separates Dichtelement gebildet.
- In einer fünften Variante wird das Abdeckelement durch das Gehäuse selbst gebildet.

Hat das Filterelement eine hexaederförmige Grundgestalt, so kann das Abdeckelement in einer bevorzugten Ausführungsform an zwei gegenüberliegenden Seiten durch je eine streifenförmige Lasche an der Endfalte des Filtermaterials und an den beiden anderen Seiten durch eine streifenförmige Lasche an einem Kantenstreifen gebildet werden. Vorteil dieser Ausführungsform ist ein besonders geringer Materialeinsatz.

In einer alternativen, ebenfalls vorteilhaften Ausführungsform, ist das Abdeckelement nur durch streifenförmige Laschen an Kantenstreifen gebildet. Vorteil dieser Ausführungsform ist eine besonders einfache und kostengünstige Fertigung. Weitere Kombinationen der vorgenannten Varianten zur Bildung des Abdeckelements sind denkbar.

Bezüglich der Positionierung des Gelkanals bestehen zwei unterschiedliche Möglichkeiten. Der umlaufende Gelkanal kann entweder am Filterelement oder am Gehäuse angebracht sein. Mit jeder der beiden Möglichkeiten sind unterschiedliche Vorteile verbunden. Bei einer Positionierung des umlaufenden Gelkanals am Filterelement kann auf besonders einfache Weise eine Erneuerung des Gelkanals zusammen mit dem Austausch des Filterelements erfolgen. Eine Positionierung des umlaufenden Gelkanals am Gehäuse hat den Vorteil, dass trotz eines Austauschs des Filterelements der Gelkanal weiterverwendet werden kann. Abhängig vom Einsatzort der Filteranordnung und dem Verschmutzungsgrad des zu reinigenden Luftstroms und den Umgebungsbedingungen kann eine der beiden Möglichkeiten gewählt werden.

In einer besonders vorteilhaften Weiterbildung der Filteranordnung kann das Filtermaterial als plissiertes Faltenpaket ausgebildet sein, als sogenannter Faltenpack mit einem zickzackförmigem Faltenbalg aus einem organischen oder anorganischen Vliesstoff.

Die Erfindung betrifft auch die Verwendung einer Filteranordnung, wie obenstehend beschrieben, als Innenraumluftfilter zur Filtration der Kabinenzuluft in einem Fahrzeug. Bei dem Fahrzeug kann es sich insbesondere um ein in der Landwirtschaft genutztes Fahrzeug handeln, zum Beispiel einen Traktor oder eine Erntemaschine.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
Fig. 1 eine erste Ausführungsform einer erfindungsgemäßen Filteranordnung
Fig. 2 eine zweite Ausführungsform einer erfindungsgemäßen Filteranordnung
Fig. 3 eine dritte Ausführungsform einer erfindungsgemäßen Filteranordnung
Fig. 4 eine vierte Ausführungsform einer erfindungsgemäßen Filteranordnung
Fig. 5 eine fünfte Ausführungsform einer erfindungsgemäßen Filteranordnung
Fig. 6 eine sechste Ausführungsform einer erfindungsgemäßen Filteranordnung
Fig. 7 eine siebte Ausführungsform einer erfindungsgemäßen Filteranordnung
Fig. 8 eine achte Ausführungsform einer erfindungsgemäßen Filteranordnung

Die Erfindung betrifft eine Filteranordnung 10 und die Verwendung einer solchen Filteranordnung und dient der Filtration eines Luftstromes. Die erfindungsgemäße Filteranordnung 10 besitzt ein Filterelement 1 in einer ersten Filterstufe und ein Gehäuse 20 zur Aufnahme des Filterelements 1, wobei das Filterelement 10 ein Filtermaterial 2 aufweist. In vorteilhafter Weise ist zwischen dem Filterelement 1 und dem Gehäuse 20 eine umlaufende Geldichtung 4 angeordnet zur Abdichtung des Filterelements 1 gegenüber dem Gehäuse 20. Diese ist insbesondere als Gelkanal 4.1 ausgeführt. Durch diese Filteranordnung 10 wird eine einfach zu handhabenden Montage eines Filterelements 1 und eine leckfreie Abdichtung im montierten Zustand sichergestellt

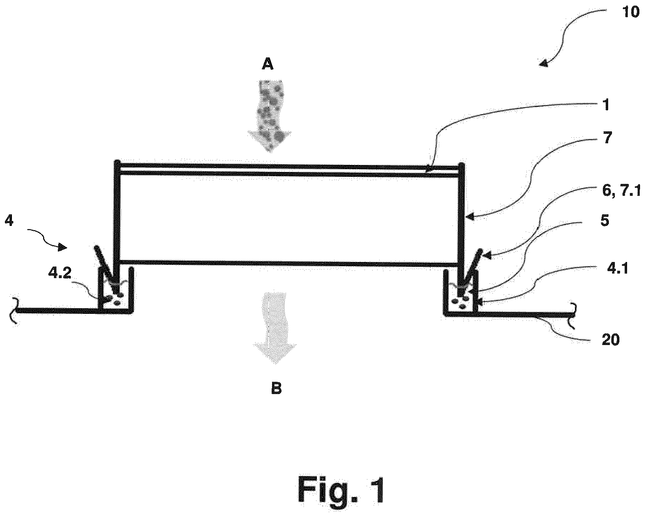

In Figur 1 ist eine erste Ausführungsform einer Filteranordnung 10 dargestellt. Die Filteranordnung 10 besitzt ein Filterelement 1, welches an einem Gehäuse 20 befestigt wird. Ein Luftstrom - dargestellt durch Pfeile - strömt von der Rohgasseite A durch das Filterelement 1 hindurch zur Reingasseite B. Das Filterelement 1 ist an dem Gehäuse 20 leckagefrei montiert und es gibt keinen Bypass für den Luftstrom zwischen Filterelement 1 und Gehäuse 20. Dazu weist die Filteranordnung 10 ein Geldichtung 4 auf, welche umlaufend zu dem Filterelement 1 ausgestaltet ist und sich entlang der Öffnung in dem Gehäuse 20 erstreckt. Die Geldichtung 4 besitzt einen nutförmigen Gelkanal 4.1, welcher mit einem Gel 4.2 (dargestellt durch mehrere Punkte) gefüllt ist. An dem Filterelement 1, welches ein plissiertes Faltenpaket 3 umfasst, sind an den Seitenflächen des Faltenpakets 3 Kantenstreifen 7 angeklebt. Diese Kantenstreifen 7 bilden an ihrem unteren Ende jeweils ein Schwert 5 aus, welches in den Gelkanal 4.1 eintaucht. Dadurch erfolgt eine Abdichtung auf der Rohgasseite A zwischen dem Filterelement 1 und dem Gehäuse 20. Die Kantenstreifen 7 sind zusätzlich mit einer Lasche 7.1 versehen, so dass sich eine in etwa V-förmige Ausgestaltung des Kantenstreifens 7 ergibt. Die Lasche 7.1 kann daher auch als V-Lasche bezeichnet werden. Die V-Lasche stellt ein unter einem Winkel von dem Kantenstreifen abstehenden Faltenabschnitt dar, welcher materialeinheitlich und einteilig mit dem Kantenstreifen 7 ist. Die Lasche 7.1 liegt mit ihrer Unterseite auf einer Oberkante des Gelkanals 4.1 auf und bildet somit ein Abdeckelement 6 des Gelkanals 4.1. Durch das Abdeckelement 6 wird verhindert, dass Partikel von der Rohgasseite A in das Gel 4.2 eingetragen werden, was zu einer Verschmutzung und vorzeitigen Alterung des Gels 4.2 führen würde.

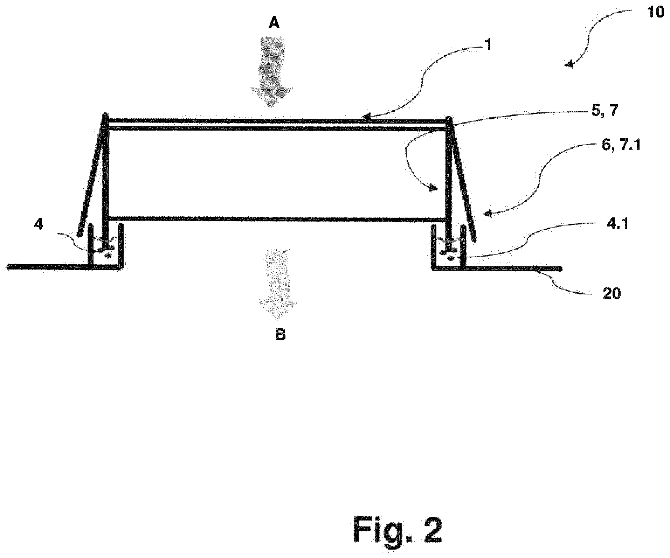

In Figur 2 ist eine ähnliche Ausführung der Filteranordnung 10 dargestellt, wobei das Abdeckelement 6 eine unterschiedliche Ausgestaltung aufweist: Das Abdeckelement 6 wird ebenfalls durch einen Teil des Kantenstreifens 7 gebildet. Dazu ist eine Lasche 7.1 des Kantenstreifens 7 vorgesehen, welche am oberen Ende des Kantenstreifens 7 den Kantenstreifen 7 berührt. Die Lasche 7.1 kann dabei durch eine Faltung des Kantenstreifens 7 gebildet werden oder kann durch Ankleben oder anderweitiges Befestigen eines weiteren Kantenstreifens an dem Kantenstreifen 7 erzeugt werden. Das untere Ende der Lasche 7.1 überdeckt den Gelkanal 4.1 ähnlich einem Walmdach. Durch das Abdeckelement 6 wird ein Eintrag von Schmutz in das Gel 4.2 verhindert.

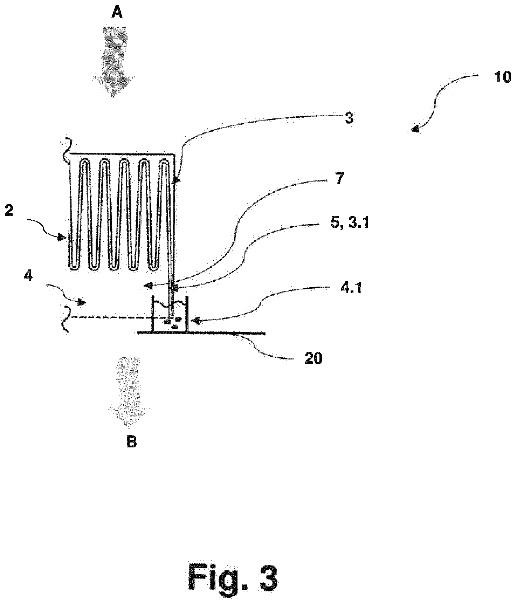

In der in Figur 3 ausschnittsweise dargestellten Ausführungsvariante der Filteranordnung 10 wird das Schwert 5 auf zwei Seiten des plissierten Faltenpakets 3 durch eine verlängerte Endfalte 3.1 des Faltenpakets gebildet. Dargestellt in Figur 3 ist nur eine Seite des plissierten Faltenpakets 3. Wie zu erkennen, wird das plissierte Faltenpaket 3 durch zickzackförmig gefaltetes Filtermaterial aus Vliesstoff 2 gebildet. Auf den beiden anderen Seiten des plissierten Faltenpakets 3, welche vor und hinter der Zeichenebene liegen, wird das Schwert 5 durch Kantenstreifen 7 gebildet, welche mit dem Faltenpaket 3 verbunden sind. Die Kantenstreifen 7 sind in der Darstellung von Figur 3 durch eine gestrichelte Linie angedeutet. Zur besseren Übersichtlichkeit ist das Abdeckelement 6 in Figur 3 nicht dargestellt. Das Abdeckelement 6 kann beispielsweise wie in Figur 2 dargestellt ausgeführt sein.

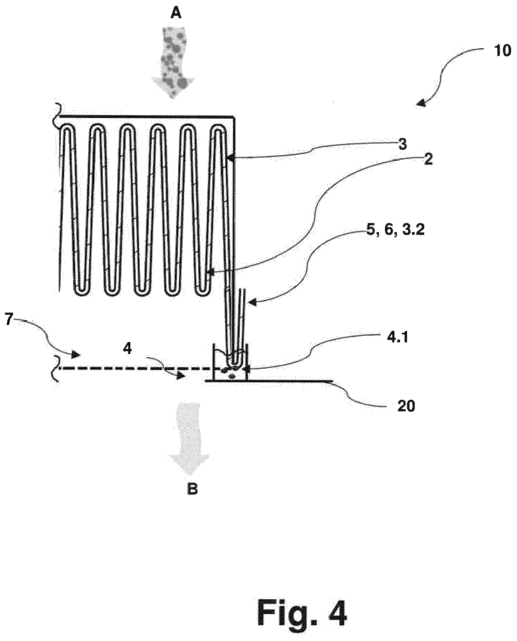

Alternativ kann das Abdeckelement 6 auf den beiden Seiten der Endfalte 3.1 auch durch das Vorsehen einer zusätzlichen Lasche 3.2 realisiert werden, wie dies in Figur 4 dargestellt ist. Dazu wurde in die Endfalte 3.1 eine weitere Faltung eingebracht, welche eine Lasche 3.2 ausbildet, die mit ihrer Unterseite auf dem Rand des Gelkanals 4.1 aufliegt. Auch so kann verhindert werden, dass Schmutz in den Gelkanal 4.1 eindringt.

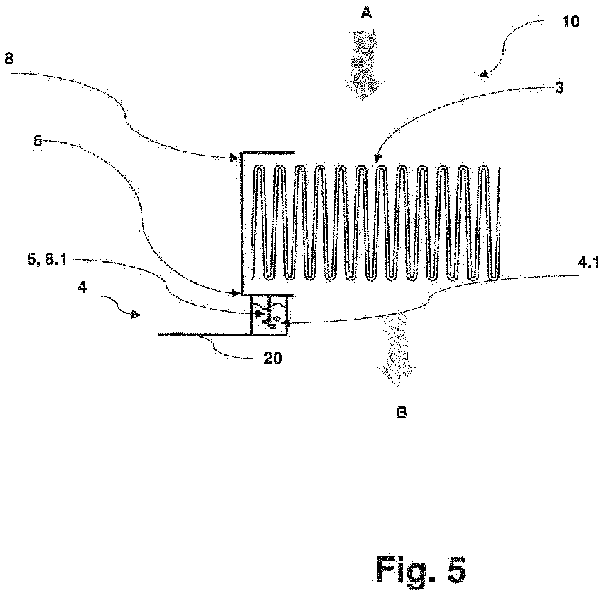

In der in Figur 5 dargestellten Ausführungsvariante der Filteranordnung 10 ist das plissierte Faltenpaket 3 mit einem Filterrahmen 8 versehen. An der Unterseite des Filterrahmens 8 ist ein umlaufender Steg 8.1 angebracht, welcher ein Schwert 5 bildet, das in den Gelkanal 4.1 eintaucht. Das Abdeckelement 6 des Gelkanals 4.1 wird durch den Filterrahmen 8 selbst gebildet, so dass keine weiteren Elemente erforderlich sind.

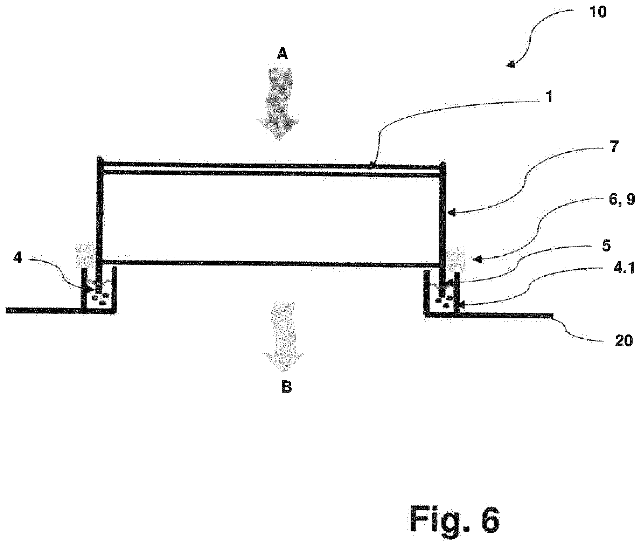

Aus Figur 6 geht eine alternative Variante zur Ausgestaltung des Abdeckelements 6 hervor. Diese kann mit den unterschiedlichen obenstehend beschriebenen Ausführungsvarianten des Schwerts 5 kombiniert werden. Dabei wird das Abdeckelement 6 durch ein, um das plissierte Faltenpaket 3 umlaufendes, Dichtelement 9 gebildet, wobei das Dichtelement 9 an dem Filterelement 1 angebracht ist, zum Beispiel mit diesem verklebt ist.

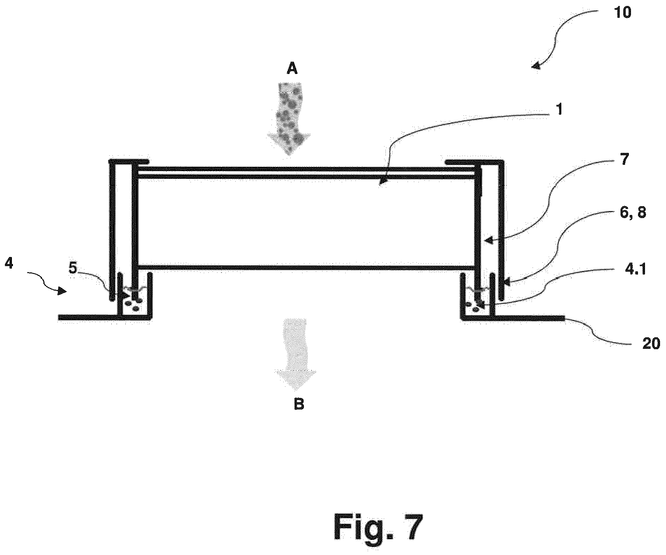

Eine weitere Variante zur Ausgestaltung des Abdeckelements 6 ist in Figur 7 dargestellt. Auch hier kann das Schwert 5 gemäß einer der obenstehend beschriebenen Ausführungsvarianten ausgeführt sein. Das Abdeckelement 6 wird durch eine Rahmenkonstruktion eines Filterrahmens 8 gebildet. Dazu umfasst die Rahmenkonstruktion 8 sowohl das Filterelement 1 als auch den Gelkanal 4.1. In anderen Worten: Die Außenkanten des Filterelements 1 sowie die Außenkanten des Gelkanals 4.1 liegen innerhalb der Rahmenkonstruktion des Filterrahmens 8. Der Filterrahmen 8 weist gegenüber der Kante des Gelkanals 4.1 einen Überhang auf, so dass im Bereich des Gelkanals 4.1 ein Überlapp besteht.

In allen Ausführungsvarianten gemäß den Figuren 6 bis 7 ist der Gelkanal 4.1 am Gehäuse 20 angebracht. Das Schwert 5 hingegen ist mit dem Filterelement 1 verbunden. Die Montage des Filterelements 1 erfolgt derart, dass das Filterelement 1 in das Gehäuse 20 eingesetzt bzw. eingeschoben wird, wobei das Schwert 5 in den Gelkanal 4.1 eintaucht. Wird ein Austausch des Filterelements 1 erforderlich, zum Beispiel weil dieses nicht mehr die erforderliche Filterleistung erfüllt, so verbleibt der Gelkanal 4.1 am Gehäuse 20 und kann mit einem neu eingesetzten Filterelement 1 weiter verwendet werden.

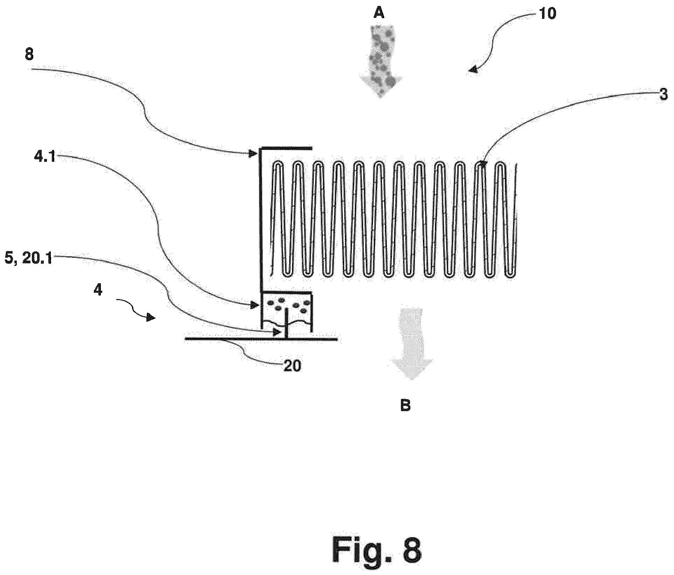

In der Filteranordnung 10, wie sie in Figur 8 dargestellt ist, wird ein anderer Ansatz verfolgt. Der Gelkanal 4.1 ist dabei an einem Filterrahmen 8 des Filterelements 1 befestigt. Das Schwert 5 hingegen wird durch einen Steg 20.1 am Gehäuse 20 ausgebildet. Der Steg 20.1 ist dabei als gegenüber der Oberfläche des Gehäuses 20 erhabene Leiste ausgebildet. Bei der Montage des Filterelements 1 an das Gehäuse 20 wird das Filterelement 1 in das Gehäuse 20 eingesetzt bzw. eingeschoben, derart, dass der Gelkanal 4.1 an das am Gehäuse 20 feststehende Schwert 5 eindringt. Bei dieser Ausführungsvariante erfolgt somit bei einem Austausch des Filterelements 1 gleichzeitig ein Austausch der Geldichtung 4.

### Bezugszeichenliste

- 1: Filterelement
- 2: Filtermaterial Vliesstoff
- 3: plissiertes Faltenpaket
- 3.1: Endfalte
- 3.2: Lasche
- 4: Geldichtung
- 4.1: Gelkanal
- 4.2: Gel
- 5: Schwert
- 6: Abdeckelement
- 7: Kantenstreifen
- 7.1: Lasche
- 8: Filterrahmen
- 8.1: Steg
- 9: Dichtelement
- 10: Filteranordnung
- 20: Gehäuse
- 20.1: Steg
- A: Rohgasseite
- B: Reingasseite

## Patentansprüche

1. Filteranordnung (10) mit einem Filterelement (1) in einer ersten Filterstufe, wobei das Filterelement (10) ein Filtermaterial (2) aufweist zur Filtration eines Luftstroms, und mit einem Gehäuse (20) zur Aufnahme des Filterelements (1),
**dadurch gekennzeichnet,**
**dass** zwischen dem Filterelement (1) und dem Gehäuse (20) eine umlaufende Geldichtung (4) angeordnet ist zur Abdichtung des Filterelements (1) gegenüber dem Gehäuse (20).

2. Filteranordnung nach Anspruch 1, **dadurch gekennzeichnet,**
**dass** die Geldichtung (4) einen Gelkanal (4.1) besitzt.

3. Filteranordnung nach Anspruch 2, **dadurch gekennzeichnet,**
**dass** die Filteranordnung (10) ein umlaufendes Schwert (5) besitzt, welches in den Gelkanal (4.1) eintaucht und, dass die Filteranordnung (10) ein umlaufendes Abdeckelement (6) besitzt zum Abdecken des Gelkanals (4.1) auf der Rohgasseite (A) der Filteranordnung (10).

4. Filteranordnung nach Anspruch 3, **dadurch gekennzeichnet,**
**dass** das Schwert (5) durch
- eine Endfalte (3.1) des Filtermaterials (2) und/oder
- einen an dem Faltenpaket (3) befestigten, insbesondere angeklebten Kantenstreifen (7) und/oder
- einen aus einem Filterrahmen (8) hervorstehenden Steg (8.1) und/oder
- einem aus dem Gehäuse (20) hervorstehenden Steg (20.1) gebildet wird.

5. Filteranordnung nach Anspruch 3 oder 4, **dadurch gekennzeichnet, dass** das Abdeckelement (6) durch
- eine streifenförmige Lasche (3.2) an der Endfalte (3.1) des Filtermaterials (2) und/oder
- eine streifenförmige Lasche (7.1) an einem an dem Faltenpaket (3) befestigten, insbesondere angeklebten Kantenstreifen (7) und/oder
- einen Filterrahmen (8) zur Halterung des Filterelements (1) und/oder
- ein am Filterelement (1) angebrachtes Dichtelement (9) und/oder
- das Gehäuse (20)
gebildet wird.

6. Filteranordnung nach einem der Ansprüche 2 bis 5, **dadurch gekennzeichnet,**
**dass** der umlaufende Gelkanal (4.1) am Filterelement (1) oder am Gehäuse (20) angebracht ist.

7. Filteranordnung nach einem der vorangehenden Ansprüche, **dadurch gekennzeichnet,**
**dass** das Filtermaterial (2) als plissiertes Faltenpaket (3) ausgebildet ist.

8. Verwendung einer Filteranordnung nach einem der vorangehenden Ansprüche als Innenraumluftfilter zur Filtration der Kabinenzuluft in einem Fahrzeug.

9. Verwendung einer Filteranordnung nach einem der Ansprüche 1 bis 7 als Frischluftfilter zur Filtration der Kabinenzuluft in einem landwirtschaftlich genutzten Fahrzeug.

10. Verwendung einer Filteranordnung nach einem der Ansprüche 8 oder 9, wobei das Filterelement in der ersten Filterstufe eingesetzt wird.
